(19) Europäisches Patentamt
European Patent Office
Office européen des brevets

(11) Publication number: **0 111 681**
**B1**

(12) **EUROPEAN PATENT SPECIFICATION**

(45) Date of publication of patent specification: **28.09.88**

(51) Int. Cl.$^4$: **C 08 G 18/24**, C 08 G 18/26, C 08 G 18/76

(21) Application number: **83110577.0**

(22) Date of filing: **22.10.83**

(54) **Use of certain catalyst compositions for the preparation of polyurethanes.**

(30) Priority: **17.12.82 US 450626**

(43) Date of publication of application:
**27.06.84 Bulletin 84/26**

(45) Publication of the grant of the patent:
**28.09.88 Bulletin 88/39**

(84) Designated Contracting States:
**AT BE CH DE FR GB IT LI NL SE**

(56) References cited:
**DE-A-1 544 637**
**DE-A-2 401 760**

**JOURNAL OF CELLULAR PLASTICS, vol. 18, no. 6, November-December 1982, Westport, Connecticut, USA; V.D. ARENDT et al. "m- and p-TMXDI: Two new isocyanates for the polyurethane industry", pages 376-3 83**

(73) Proprietor: **AMERICAN CYANAMID COMPANY**
**1937 West Main Street P.O. Box 60**
**Stamford Connecticut 06904-0060 (US)**

(72) Inventor: **Megna, Ignazio Salvatore**
**RD 4, Box 24B Woods Road**
**Lebanon New Jersey 08833 (US)**

(74) Representative: **Wächtershäuser, Günter, Dr.**
**Tal 29**
**D-8000 München 2 (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention generally relates to improvements in catalysis of the reaction between hindered aliphatic isocyanates and hydroxyl-containing compounds. More specifically, the invention relates to the use of certain synergistic catalyst compositions for the formation of polyurethane by reaction between hydroxyl-containing compounds and secondary and/or tertiary aliphatic diisocyanates.

The term "aliphatic isocyanate" refers to compounds in which the isocyanate group (—NCO) is attached to a carbon atom not in an aromatic ring, and hindered isocyanates are those in which the carbon atom to which the isocyanate group is attached is provided with at least one other inert substituent, generally a lower ($C_1$—$C_8$) alkyl group. The preparation of polyurethanes from aliphatic isocyanates is well-known and the advantages derived therefrom are appreciated by those skilled in the art. Primary aliphatic isocyanates, for example, 1,6-hexamethylene diisocyanate, react significantly faster with compounds containing amino, carboxyl and hydroxyl groups than secondary or tertiary isocyanates. However, many isocyanates containing secondary and/or tertiary isocyanate groups are known and some of them provide highly useful polyurethane products. Unfortunately, they usually are exceedingly slow reacting and require catalysis, especially in reactions with hydroxyl-containing compounds.

Reaction injection molding, commonly referred to by the acronym RIM, is a relatively recent advance in polyurethane technology. The process requires fast polyurethane reactions, that is, on the order of seconds at temperatures in the range of about 25—40°C. Commonly used polyurethane catalysts, such as lead naphthenate and dialkyl tin dicarboxylates, are not adequate to promote the reaction between hindered aliphatic isocyanates and hydroxyl-containing compounds under these conditions.

It is, therefore, a principal object of the present invention to provide catalyst compositions which increase the rate of reaction between hindered aliphatic secondary and/or tertiary isocyanates and hydroxyl-containing compounds. It is another object of the invention to provide catalyst compositions for the practical utilization of hindered aliphatic secondary and/or tertiary isocyanates in the RIM reaction with hydroxyl-containing compounds. It is still another object of the invention to provide catalyst compositions for the RIM reaction between aliphatic tertiary diisocyanates and both primary and secondary polyols.

In accordance with the present invention, it has been discovered that certain combinations, or mixtures, of lead naphthenate and dialkyl tin dicarboxylates provide enhanced reaction rates between hindered aliphatic secondary and/or tertiary isocyanates and hydroxyl-containing compounds. More specifically, certain combinations of lead naphthenate and dialkyl tin dicarboxylates are synergistic and provide rates of reaction several times faster than are obtained with either catalyst component alone.

The catalyst compositions to be used according to the present invention are effective in accelerating the reaction between hydroxyl-containing compounds and aliphatic isocyanates containing at least one secondary or tertiary isocyanate group.

Stallmann, in US—A—2 723 265, describes the preparation of a broad range of hindered isocyanates represented by the formula:

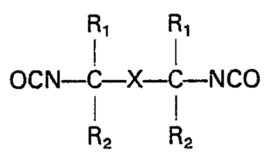

wherein $R_1$ and $R_2$ represent lower alkyl ($C_1$—$C_8$) groups and X represents a bridging unit.

A process for the preparation of compounds containing secondary and tertiary isocyanates is disclosed by Hoover in US—A—3 290 350. In the process disclosed in this patent, isocyanic acid is added to a compound containing at least one reactive vinylidene group, of the formula:

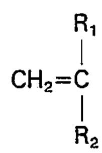

wherein $R_1$ is selected from the group consisting of hydrogen and hydrocarbyl ($C_1$—$C_{12}$) groups and $R_2$ is hydrogen, hydrocarbyl ($C_1$—$C_{12}$) or substituted hydrocarbyl, wherein the substituents are inert to isocyanic acid and are bonded to a carbon atom at least 2 carbon atoms removed from the ethylenic linkage, or $R_1$ and $R_2$ are conjointly hydrocarbylene of 2—12 carbon atoms. Isocyanates prepared according to this process contain the group:

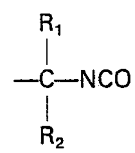

A particularly useful class of isocyanates prepared according to the process of US—A—3 290 350 are those derived from compounds having more than one vinylidene group, the product isocyanates being represented by the formula:

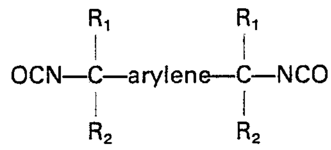

wherein $R_1$ is hydrogen or $C_1$—$C_4$ alkyl and $R_2$ is hydrogen or $C_1$—$C_4$ alkyl.

A wide range of both secondary and/or tertiary isocyanates and diisocyanates may be prepared in accordance with the aforementioned prior art, the reaction of which with hydroxyl-containing compounds may usefully be catalyzed by the catalyst compositions of the present invention. Such isocyanates and diisocyanates may for example include, but are not limited to, the following compounds:

α,α'-dimethyl-p-xylylene diisocyanate,
α,α,α',α'-tetramethyl-m-xylylene diisocyanate,
α,α,α',α'-tetramethyl-p-xylylene diisocyanate,
α-methyl-α,α'-dimethyl-m-xylylene diisocyanate,
bis[4-(1-isocyanato-1-methylethyl)phenyl]methane,
α-ethyl-α'-methyl-p-xylylene diisocyanate,
2,6-bis(1-isocyanato-1-methylethyl)naphthalene,
1,4-bis(1-isocyanato-1-methylethyl)cyclohexane,
1,3-bis(1-isocyanato-1-methylethyl)cyclohexane,
1,8-diisocyanato-p-menthane, and isophorone diisocyanate.

Many catalysts have been used to accelerate the rate of reaction between isocyanates and hydroxyl-containing compounds. Lead naphthenate and dialkyl tin dicarboxylates are two of the more commonly used catalyst materials heretofore employed for such purpose. Neither of these catalysts, however, when used alone at any reasonable concentration, is effective to adequately accelerate the reaction between hindered aliphatic isocyanates and hydroxyl-containing compounds at temperatures below about 100°C. In accordance with the present invention, mixtures of lead naphthenate and dialkyl tin dicarboxylates, containing from 25 to 75 percent by weight of dialkyl tin dicarboxylate, provide reaction rates several times greater than are obtained by the use of either component alone. A preferred composition contains about 50 weight percent of each component.

Dialkyl tin dicarboxylates, represented by the structure:

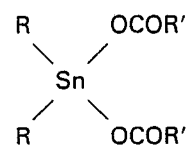

wherein R represents an alkyl group containing from 1 to 8 carbon atoms, and R' represents an alkyl group containing from 1 to 18 carbon atoms, are well-known catalyst compounds per se. The preferred dialkyl tin dicarboxylates are dimethyl tin dilaurate and dibutyl tin dilaurate.

The lead naphthenate/dialkyl tin dicarboxylate catalyst compositions of the present invention in general may be used effectively at a concentration of 0.05 to 5 percent by weight, based on the weight of the isocyanate and the hydroxyl-containing reactants, although in some instances higher concentrations may be used to advantage.

The catalyst compositions to be used according to the present invention are suitably employed with aliphatic secondary and/or tertiary diisocyanates which are reacted with primary and/or secondary polyols, as commonly used in the art, to produce polyurethane products, e.g., coatings and injection molded products, according to conventional polyurethane technology. Such commonly used polyols include, for example, ethylene glycol, 1,2-propanediol, 1,3-propanediol, 1,4-butanediol, 1,6-hexanediol, glycerol, trimethylolpropane and p,p'-bis(hydroxyethoxy)benzene; low molecular weight (mol. wt. 500—5000) polymers or oligomers, such as hydroxyl-terminated polyether polyols, for example, polytetramethylene ether glycol, polyethylene glycol, polypropylene glycol, and propylene glycol/ethylene glycol block copolymers; and hydroxyl-terminated polyester polyols such as, polyethyleneadipate, poly(ethylenepropylene)adipate, and hydroxyl-terminated polyurethane prepolymers prepared therefrom.

The present invention is illustrated by the following non-limiting examples, wherein all parts and percentages are by weight unless otherwise indicated.

Example 1

A mixture of 10 grams of dry polytetramethylene ether glycol (OH No. 56.1, mol. wt. 2000), 0.89 gram of

α,α,α',α'-tetramethyl-m-xylylene diisocyanate, 3.66 grams of trimethylol propane, and 1.5 ml. of dry toluene was warmed to 73—75°C. The warm solution was immediately placed in a calorimeter. To the solution was added 3.6 ml. of a 4% solution of catalyst in dry toluene (1% by weight, based on the weight of polymer reactants). The temperature initially dropped to 70°C and was followed by an exotherm and an increase in the viscosity of the solution. The peak temperature (°C) and the time (minutes) to cessation of flow (gelation time) were recorded. The gelation time provides a measure of catalyst efficiency, with shorter gelation time values indicating greater catalyst effectiveness. The following data were obtained.

| Catalyst | Peak temperature, °C. | Gelation time, min. |
|---|---|---|
| Lead naphthenate (LN) | 89 | 3.5 |
| Dimethyl tin dilaurate (DMTDL) | 94 | 2.3 |
| 50/50 LN/DMTDL | 96 | 0.6 |

The data clearly show a marked increase in efficiency, as manifested by reduced gelation time, of the 50/50 catalyst composition.

Example 2

The procedure of Example 1 was followed except that dibutyl tin dilaurate (DBTDL) was used instead of dimethyl tin dilaurate. The following data were obtained.

| Catalyst | Peak temperature, °C. | Gelation time, min. |
|---|---|---|
| LN | 89 | 3.5 |
| DBTDL | 94 | 4.6 |
| 50/50-LN/DBTDL | 98 | 1.1 |

The data again shows the increased efficiency of the catalyst composition of the invention.

Example 3

The procedure of Example 1 was followed except that 3.33 grams of isophorone diisocyanate was used instead of 0.89 gram of α,α,α',α'-tetramethyl-m-xylylene diisocyanate. The following data were obtained.

| Catalyst | Peak temperature, °C. | Gelation time, min. |
|---|---|---|
| LN | 100 | 2.10 |
| DMTDL | 96 | 3.60 |
| 50/50-LN/DMTDL | 97 | 1.05 |

Example 4

The procedure of Example 1 was followed except that 3.22 grams of 1,8-diisocyanato-p-menthane was used instead of 0.89 gram of α,α,α',α'-tetramethyl-m-xylylene diisocyanate. The following data were obtained.

| Catalyst | Peak temperature, °C. | Gelation time, min. |
|---|---|---|
| LN | 81 | 45 |
| DMTDL | 80 | 65 |
| 50/50-LN/DMTDL | 85 | 4 |

**Claims**

1. Use of a catalyst composition comprising (a) lead naphthenate and (b) a dialkyl tin dicarboxylate in a weight ratio of from 25:75 to 75:25 for catalysts of reaction between aliphatic hydroxyl-containing compounds and hindered aliphatic secondary and/or tertiary isocyanate compounds.

2. Use according to Claim 1, characterized in that said dialkyl tin dicarboxylate is of the formula:

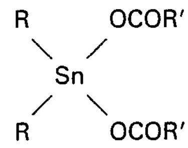

wherein R is $C_1$—$C_8$ alkyl and R′ is $C_1$—$C_{18}$ alkyl.

3. Use according to Claim 2, characterized in that said dialkyl tin dicarboxylate is selected from dimethyl tin dilaurate and dibutyl tin dilaurate.

4. Use according to Claim 1, characterized in that the weight ratio of (a) to (b) is about 50:50.

5. Use according to Claim 1, characterized in that from 0.05 to 5 percent by weight (based on the weight of the isocyanate and the hydroxyl-containing reactants) of the catalyst composition are incorporated into the reaction mixture.

6. Use according to Claim 5, characterized in that said reaction mixture comprises an isocyanate compound of the formula:

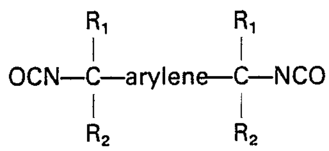

wherein $R_1$ is hydrogen or $C_1$—$C_4$ alkyl and $R_2$ is hydrogen or $C_1$—$C_4$ alkyl.

7. Use according to Claim 6, characterized in that said reaction mixture comprises 1,8-diisocyanato-p-menthane.

**Patentansprüche**

1. Verwendung einer Katalysatorzusammensetzung, umfassend (a) Bleinaphthenat und (b) ein Dialkylzinndicarboxylat in einem Gewichtsverhältnis von 25:75 bis 75:25, zur Katalyse der Umsetzung zwischen aliphatischen, hydroxylhaltigen Verbindungen und gehinderten, aliphatischen, sekundären und/oder tertiären Isocyanatverbindungen.

2. Verwendung gemäß Anspruch 1, dadurch gekennzeichnet, daß das Dialkylzinndicarboxylat die folgende Formel aufweist:

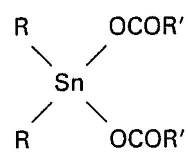

wobei R für $C_{1-8}$-Alkyl steht und R′ für $C_{1-18}$-Alkyl steht.

3. Verwendung gemäß Anspruch 2, dadurch gekennzeichnet, daß das Dialkylzinndicarboxylat ausgewählt ist aus Dimethylzinndilaurat und Dibutylzinndilaurat.

4. Verwendung gemäß Anspruch 1, dadurch gekennzeichnet, daß das Gewichtsverhältnis von (a) zu (b) etwa 50:50 beträgt.

5. Verwendung gemäß Anspruch 1, dadurch gekennzeichnet, daß der Reaktionsmischung von 0,05 bis 5 Gew.-% (bezogen auf das Gewicht der Isocyanat-Reaktanten und der hydroxylhaltigen Reaktanten) der Katalysatorzusammensetzung einverleibt sind.

6. Verwendung gemäß Anspruch 5, dadurch gekennzeichnet, daß die Reaktionsmischung eine Isocyanatverbindung der folgenden Formel umfaßt:

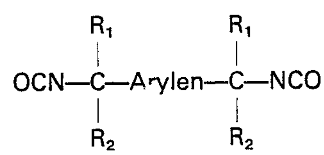

wobei $R_1$ für Wasserstoff oder $C_{1-4}$-Alkyl steht und $R_2$ Wasserstoff oder $C_{1-4}$-Alkyl bedeutet.

7. Verwendung gemäß Anspruch 6, dadurch gekennzeichnet, daß die Reaktionsmischung 1,8-Diisocyanato-p-menthan umfaßt.

**Revendications**

1. Utilisation d'une composition de catalyseurs comprenant (a) du naphténate de plomb et (b) un

dicarboxylate de dialkylétain, en un rapport pondéral de 25:75 à 75:25, pour la catalyse de la réaction entre des composés aliphatiques hydroxylés et des isocyanates aliphatiques secondaires et/ou tertiaires à empêchement stérique.

2. Utilisation selon la revendication 1, caractérisée en ce que ledit dicarboxylate de dialkylétain est de formule:

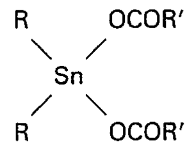

dans laquelle R est un groupe alkyle en $C_1$—$C_8$, et R' est un groupe alkyle en $C_1$—$C_{18}$.

3. Utilisation selon la revendication 2, caractérisée en ce que ledit dicarboxylate de dialkylétain est choisi parmi le dilaurate de diméthylétain et le dilaurate de dibutylétain.

4. Utilisation selon la revendication 1, caractérisée en ce que le rapport pondéral de (a) à (b) est environ 50:50.

5. Utilisation selon la revendication 1, caractérisée en ce que l'on incorpore dans le mélange réactionnel de 0,05 à 5% en poids de la composition de catalyseurs, par rapport au poids de l'isocyanate et des composés hydroxylés en réaction.

6. Utilisation selon la revendication 5, caractérisée en ce que ledit mélange réactionnel comprend un isocyanate de formule

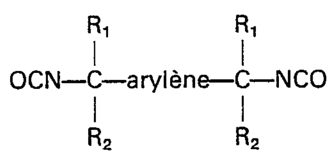

dans laquelle $R_1$ est un atome d'hydrogène ou un groupe alkyle en $C_1$—$C_4$, et $R_2$ est un atome d'hydrogène ou un groupe alkyle en $C_1$—$C_4$.

7. Utilisation selon la revendication 6, caractérisée en ce que ledit mélange réactionnel comprend le 1,8-diisocyanato-p-menthane.